# EUROPEAN PATENT APPLICATION

(11) **EP 4 787 236 A1**
(43) Date of publication of application: **05.08.2026**
(21) Application number: 26150848.5
(22) Date of filing: 08.01.2026
(51) Int. Cl.: G06N 3/0455, G06N 3/084

(54) **AUTOMATED CONTENT MODALITY TRANSFORMATION**

(30) Priority: 30.01.2025 US 202519041713
(71) Applicant: Intuit Inc., Mountain View, CA 94043 (US)
(72) Inventor: KUMAR, Sricharan Kallur Palli, Mountain View, 94043 (US); SRIVASTAVA, Ashok, Mountain View, 94043 (US); KRISHNAMURTHY, Sembian, Mountain View, 94043 (US); TONNE, Nagesh, Mountain View, 94043 (US); PAREKH, Rajesh Girish, Mountain View, 94043 (US); MOTURU, Tapasvi, Mountain View, 94043 (US); SUBRAHMANIAM, Vignesh Thirukazhukundram, 560103 Bangalore (IN)
(74) Representative: D Young & Co LLP

(57) **Abstract**

Aspects of the present disclosure relate to automated content modality transformation. Embodiments include receiving content that corresponds to a particular modality. Embodiments further include providing the content as input to a generative machine learning model that has been trained to generate versions of provided content items that correspond to a target modality. Embodiments further include receiving, as an output from the generative machine learning model, a new version of the content that corresponds to the target modality. Embodiments further include providing the content and the new version of the content as input to a given machine learning model that is trained to generate a confidence score that indicates a likelihood that the new version is an accurate representation of the content in the target modality. Embodiments further include performing one or more actions involving the new version of the content based on the confidence score.

## Description

### INTRODUCTION

Aspects of the present disclosure relate to techniques for automatically converting content from one modality to another modality. In particular, techniques described herein involve converting content items into a modality that is compatible with a content processing engine such that the content processing engine can be used to assist users in performing tasks involving the content.

### BACKGROUND

Every year millions of people, businesses, and organizations around the world perform tasks involving digital content, such as images, texts, tables, and/or other forms of electronically-stored data. For example, digital content may be provided to a machine learning model system to perform tasks involving the digital content, such as summarizing the content, generating similar content, generating recommendations based on the content, and/or the like.

Performing tasks involving content may require converting the content from one modality to another. For example, image data may need to be converted into text data (e.g., a textual description of the contents of the image) to be utilized by a language processing machine learning model (e.g., a large language model). As another example, data provided in a chart may need to be converted into a table to be processed by a computing system.

Manually converting content from one modality to another may be an extremely costly and tedious process. As an example, manually converting large amounts of content into a modality that can be processed by a downstream system can require a prohibitively large amount of manual labor. Thus, systems that could otherwise be automated may be cumbersome and inefficient to use.

Thus, there is a need in the art for improved techniques of content modality transformation.

### BRIEF SUMMARY

Particular embodiments are set out in the independent claims. Various optional examples are set out in the dependent claims. Certain embodiments provide a method of automated content modality transformation. The method generally includes: receiving content, wherein the content corresponds to a particular modality; providing the content as input to a generative machine learning model, wherein the generative machine learning model has been trained to generate versions of provided content items that correspond to a target modality; receiving, as an output from the generative machine learning model, a new version of the content that corresponds to the target modality; providing the content and the new version of the content as input to a given machine learning model, wherein the given machine learning model is trained to generate a confidence score that indicates the likelihood that the new version is an accurate representation of the content in the target modality; and performing one or more actions involving the new version of the content based on the confidence score.

Other embodiments provide a method of modality-shifting content processing. The method generally includes: receiving an input comprising content and an indication of a use case, wherein the content corresponds to a particular modality; converting the content to a target modality using a generative machine learning model that is trained to generate versions of content items that correspond to the target modality; retrieving a knowledge graph based on the indicated use case; providing an input based on the converted content and the retrieved knowledge graph to a given machine learning model that is configured to generate an output based on content items that correspond to the target modality; and receiving the output from the given machine learning model.

Other embodiments provide processing systems configured to perform the aforementioned methods as well as those described herein; non-transitory, computer-readable media comprising instructions that, when executed by one or more processors of a processing system, cause the processing system to perform the aforementioned methods as well as those described herein; a computer program product embodied on a computer readable storage medium comprising code for performing the aforementioned methods as well as those further described herein; and a processing system comprising means for performing the aforementioned methods as well as those further described herein.

The following description and the related drawings set forth in detail certain illustrative features of one or more embodiments.

### BRIEF DESCRIPTION OF THE DRAWINGS

The appended figures depict certain aspects of the one or more embodiments and are therefore not to be considered limiting of the scope of this disclosure.
**FIG. 1** depicts an example of computing components related to automated content modality transformation.
**FIG. 2** depicts an additional example of computing components related to automated content modality transformation.
**FIG. 3** depicts an additional example of computing components related to automated content modality transformation.
**FIG. 4** depicts an additional example of computing components related to automated content modality transformation.
**FIG. 5** depicts an additional example of computing components related to automated content modality transformation.
**FIG. 6** depicts example operations related to automated content modality transformation.
**FIG. 7** depicts additional example operations related to automated content modality transformation.
**FIG. 8** depicts an example of a processing system for automated content modality transformation.

To facilitate understanding, identical reference numerals have been used, where possible, to designate identical elements that are common to the drawings. It is contemplated that elements and features of one embodiment may be beneficially incorporated in other embodiments without further recitation.

### DETAILED DESCRIPTION

Aspects of the present disclosure provide apparatuses, methods, processing systems, and computer-readable mediums for automated content modality transformation.

According to certain embodiments, content that corresponds to a particular modality (e.g., an image) may be provided as input to a generative machine learning model. The generative machine learning model may comprise multiple encoders, and each encoder may be trained to convert content of a given modality to a target modality. The content may be routed to an encoder of the generative machine learning model that is trained to process content of the particular modality. The content may then be processed through the generative machine learning model to produce a version of the content that corresponds to a target modality (e.g., a text description of a picture). Then, the new version of the content and the original version of the content may be provided to a model that is configured to generate a confidence score that indicates a likelihood that the new version of the content is an accurate representation of the original in the target modality. One or more actions may be performed based on the confidence score. For example, if the score fails to exceed a threshold, a user may be provided with an indication that the system was unable to process the content. If the score exceeds the threshold, the new version of the content may be provided to the user or used in a downstream task.

In some embodiments, the confidence score is generated using a machine learning model that is trained using training data that comprises pairs of content items and versions of the content items in a target modality. The training data may include a label that indicates whether the version of the content in the target modality is an accurate representation of the content. The machine learning model may be provided with the training data as input, and parameters of the machine learning model may be iteratively adjusted based on variances between the label and an output generated by the machine learning model. Once trained, the machine learning model may generate a confidence score based on provided content and a new version of the provided content.

Certain embodiments provide that the confidence score is generated based on providing the new version of the content to a model that is configured to reverse the transformation from the particular modality to the target modality. For example, the content may have been converted to the target modality from the particular modality. Then, the converted content may be provided to a model that is configured to revert the content to the particular modality from the target modality. The reverted content may be compared to the original content (e.g., using a semantic similarity algorithm), and the confidence score may be based on the comparison. For example, if the difference between the original content and the reverted content is high, this may indicate that the transformation was unreliable and the confidence score may be low. By contrast, if the difference between the original content and the reverted content is low, this may indicate that the transformation was reliable and the confidence score may be high.

According to some embodiments, content that is converted into a target modality according to techniques described herein may be provided as part of an input to a machine learning model system that is configured to perform a task based on content that corresponds to the target modality. The machine learning model system may analyze the converted content based on a knowledge graph that corresponds to a use case. For example, the knowledge graph may indicate that two items of data are required. The converted content may contain the first item but lack the second item. Based on this, the machine learning model system may generate an output instructing the user to provide the second item of information. The user may then provide a content item that includes the second item of information, the content item may be converted into the target modality, and the machine learning model system may generate a final output for the user. For example, the final output may be an answer to a question submitted by the user, and the content items may have been images provided to the system by the user.

Embodiments of the present disclosure provide numerous technical and practical effects and benefits. For example, by enabling reliable automated conversion of content from one modality to another, techniques described herein allow for seamless integration of different modalities of content into automated processing systems. As a result, systems that previously required manual conversion of content into a target modality may be fully automated, resulting in higher efficiency and usability of these systems. Thus, embodiments of the present disclosure increase the amount of content modalities that are compatible with automated systems.

Furthermore, embodiments disclosed herein improve the reliability of content processing systems. For example, by generating confidence scores for newly generated versions of content, techniques disclosed herein prevent hallucinations and the corresponding downstream errors associated with the hallucinations. As a result, computing resources may be conserved by identifying inaccurate representations of content and preventing content processing systems from performing tasks based on these inaccurate representations.

### Example of Computing Components Related to Automated Content Modality Transformation

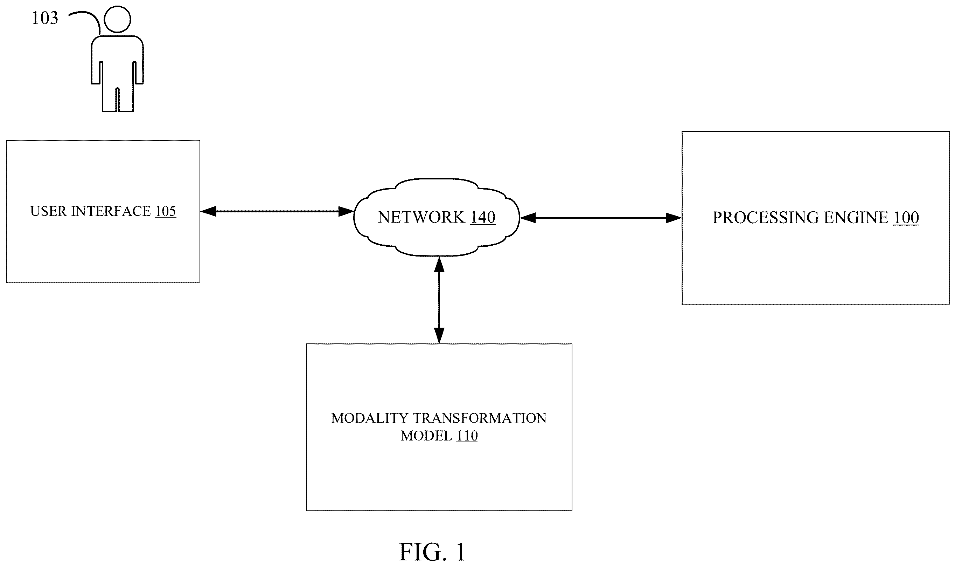

**FIG. 1** depicts an example of computing components related to automated content modality transformation.

A user 103 may interact with a computing environment via a user interface 105 associated with a computing device. The computing environment may, for example, comprise a software application. The software application may use processing engine 100 to perform tasks involving content provided by the user 103. For example, the processing engine 100 may be used to generate an output based on the user-provided content, such as similar content, an answer to a question based on the content, a summary of the content, and/or the like.

A modality transformation model 110 may be used to convert the user-provided content into a modality that is compatible with the processing engine 100. For example, the user-provided content may comprise an image, and the modality transformation model 110 may transform the image into a modality such as a table, a natural language description of the image, an embedding representation, and/or the like. The transformed content may be provided to the processing engine 100, which may generate an output based on the content.

The software application associated with the user interface 105, the processing engine 100, and the modality transformation model 110 may interact over network 140. Network 140 may be any connection over which data may be transmitted. In one example, network 140 is the Internet.

As a result, embodiments of the present disclosure may be deployed on a large scale, which allows for compounding the efficiency and compatibility benefits discussed above. For example, when deployed at a large scale, millions of users of a software application may utilize the modality transformation system simultaneously in order to seamlessly interact with the software application.

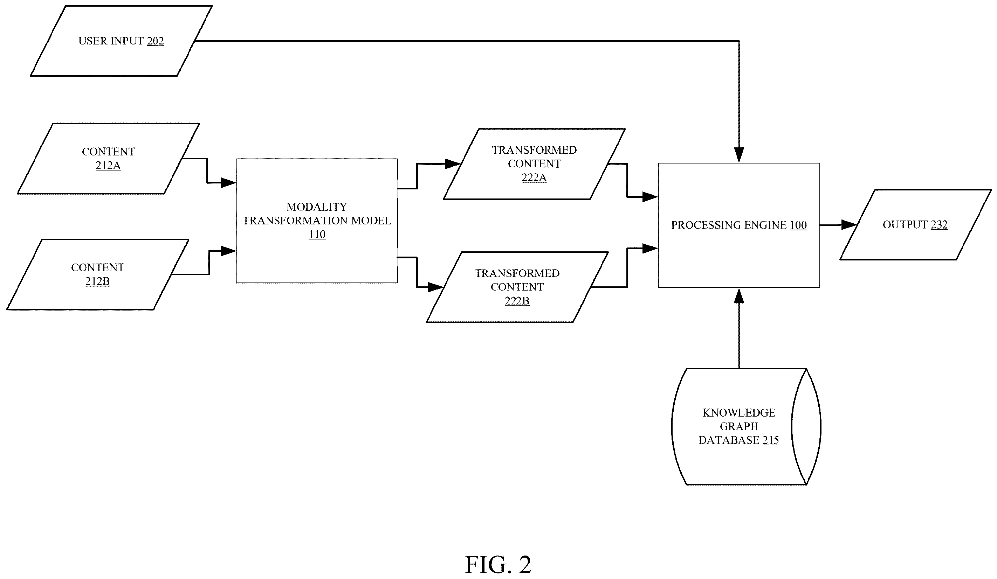

**FIG. 2** depicts an additional example of computing components related to automated content modality transformation. In particular, **FIG. 2** depicts functionality that may be performed by the processing engine 100 and modality transformation model 110 of **FIG. 1****.**

A user may provide user input 202 and content 212A and 212B. The user input 202 may comprise an indication of a use case. For example, the use case may be to provide an answer to a question, and the user input 202 may include a question. Content 212A and 212B may comprise documents, images, and/or the like that are related to the question. As another example, the use case may be to generate recommendations regarding a home renovation project (e.g., recommended steps to take, budget predictions, and/or the like). Content 212A and 212B may comprise pictures of rooms within the home.

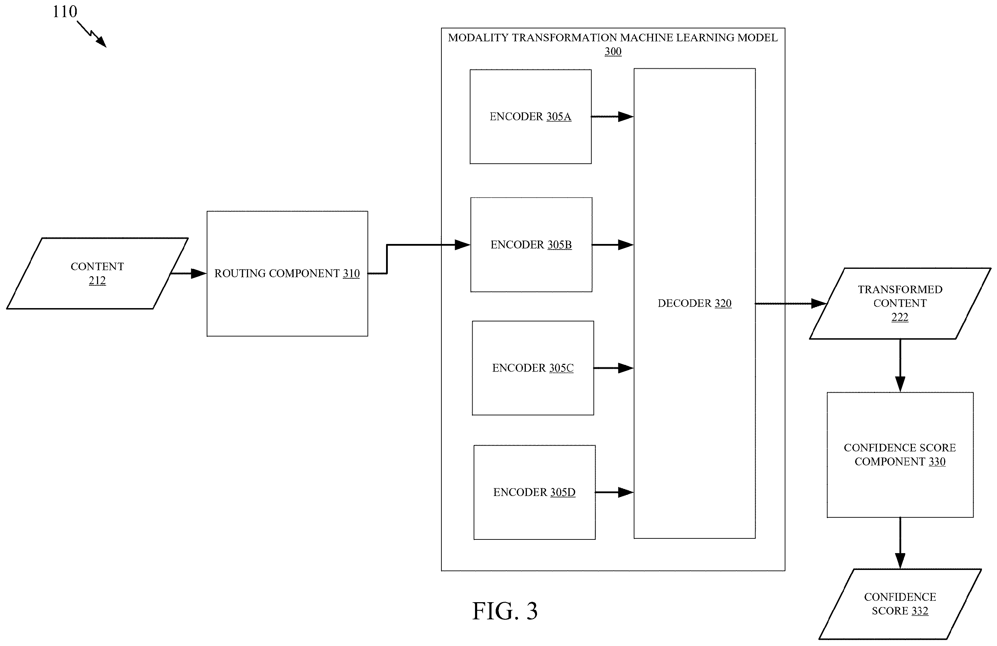

As described in further detail below with respect to **FIG. 3**, the modality transformation model 110 may comprise a generative machine learning model, such as a large language model (LLM). The modality transformation model 110 may be trained to convert content from one or more modalities to a target modality that is compatible with the processing engine 100. For example, content 212A may comprise a first modality, such as an image. Based on this, content 212A may be routed to an encoder of the modality transformation model 110 that is trained to transform images into the target modality. By contrast, content 212B may comprise data arranged in a particular type of table. Based on this, content 212B may be routed to an encoder of the modality transformation model 110 that is trained to convert the particular type of table into the target modality.

Transformed content 222A and 222B may represent versions of content 212A and 212B that have been generated in the target modality. For example, the target modality may be a natural language description of an item of content. Thus, transformed content 222A may comprise a natural language description of content 212A, and transformed content 222B may comprise a natural language description of content 212B.

Transformed content 222A and 222B may be provided as part of an input to processing engine 100. For example, transformed content 222A and 222B may be included in a prompt or used to make a prompt that is provided to processing engine 100. Processing engine 100 may comprise a generative machine learning model (e.g., an LLM) that is configured to generate an output 232 based on transformed content items.

The input provided to the processing engine 100 may also be based on the user input 202. Processing engine 100 may identify a knowledge graph within knowledge graph database 215 based on the user input 202. For example, if the user input 202 indicates a use case, processing engine 100 may retrieve knowledge graphs associated with that use case. Knowledge graphs may also be retrieved based on the transformed content. Retrieval of knowledge graphs may involve using a graph query language, using embedding representations of nodes within a graph to identify nodes that are similar to use cases or content, and/or other techniques of retrieving knowledge graphs as known in the art.

Knowledge graphs generally comprise any type of collection of data. A knowledge graph may contain data related to particular use cases. As an example, for a use case relating to generating an answer to a given type of question, a knowledge graph may contain information relating to the given type of question. For example, the knowledge graph may indicate the different types of information that a user should provide in order to generate an answer to the question.

Knowledge graphs may comprise data arranged in a tree-like structure, where nodes that include data are linked by branches that indicate relationships among the nodes. For instance, a parent node may correspond to a use case, and the child nodes to the parent node may indicate information that should be provided to generate an output for that use case. The child nodes may have child nodes that indicate additional data that should be provided based on data provided by the user. For example, a node may indicate that a follow-up request for a first type of data should be made, whereas a second type of data may not be relevant. Thus, a node corresponding to the first type of data may need to be populated, whereas a node corresponding to the second type of data may be disregarded.

A knowledge graph may be learned based on rules associated with a domain and/or historical data patterns. For example, a knowledge graph may be dynamically updated by adjusting one or more weights associated with one or more edges of the knowledge graph based on historical data and/or rules. For instance, the historical data may indicate that a particular item of information is rarely used in generating a response. The knowledge graph may therefore be dynamically updated to adjust (e.g., decrease) a weight associated with an edge of the knowledge graph that connects two or more nodes of the knowledge graph that are associated with the item of information. Conversely, the historical data may indicate that a particular data item is frequently used in generating a response. Thus, the knowledge graph may be dynamically updated to adjust (e.g., increase) a weight associated with an edge of the knowledge graph that connects two or more nodes of the knowledge graph that are associated with the particular data item. In some embodiments, knowledge graph weights may be determined and/or updated using the hybrid neural network.

Based on the transformed content 222A and 222B, the processing engine 100 may identify data that should be provided based on a knowledge graph associated with the indicated use case. For example, data items W, X, Y, and Z may be required to generate a full answer to a question. The use case of answering a question may be represented by a parent node in the knowledge graph, and data items W, X, Y, and Z may be represented as child nodes of the parent node. Transformed content 222A and 222B may contain data items W and X. However, the transformed content 222A and 222B may not include data items Y and Z. Based on this, the processing engine 100 may generate an output comprising an instruction or request for the user to provide missing data items Y and Z. The user may provide an additional content item (e.g., a picture of a document that contains data items Y and Z), the additional content item may be transformed into the target modality, and the transformed additional content item may be provided to the processing engine 100. Based on this, the processing engine 100 may generate an output 232, which may comprise a full answer to the question. The output 232 may be provided to the user via a user interface.

In some embodiments, transformed content items may be provided to the processing engine 100 based on a confidence score. For example, if a confidence score generated with respect to a transformed content item fails to exceed a threshold, this may indicate that the transformed content item is not an accurate representation of the original content item. Thus, if the confidence score does not exceed a threshold, the transformed content item may not be provided to the processing engine and the user may be provided with an indication that the original content item could not be processed by the system. If the confidence score exceeds the threshold, the transformed content item may be provided to the processing engine 100, which may generate the output 232 based on the transformed content item.

According to certain embodiments, embedding representations of the transformed content items may be created and provided to the processing engine 100. For example, instead of being provided with the transformed content items, the processing model 100 may be provided with the embedding representations thereof, and may generate the output 232 based on the embedding representations. An embedding generally refers to a vector representation of an entity that represents the entity as a vector in n-dimensional space such that similar entities are represented by vectors that are close to one another in the *n-*dimensional space. Embeddings may be generated using an embedding model in some embodiments. The embedding model may comprise a neural network or other type of machine learning model that learns a representation (embedding) for an entity through a training process that trains the neural network based on a data set, such as a plurality of features of a plurality of entities. In one example, the embedding model comprises a Bidirectional Encoder Representations from Transformer (BERT) model, which involves the use of masked language modeling to determine embeddings. In a particular example, the embedding model comprises a Sentence-BERT model. In other embodiments, the embedding model may involve embedding techniques such as Jena Al, Word2Vec, and GloVe embeddings. These are included as examples, and other techniques for generating vector representations of entities (such as embedding representations) are possible.

**FIG. 3** depicts an additional example of computing components related to automated content modality transformation. In particular, **FIG. 3** depicts the modality transformation model 110 of **FIG. 1** and **FIG. 2** in greater detail.

Content 212 may be provided to a routing component 310. The routing component 310 may comprise a computing component that is configured to route the content 222 to an encoder 305 of the modality transformation machine learning model 300 based on the modality of the content 212. For example, the routing component 310 may route the content 212 based on one or more features of the content 212, such as the file type of the content 212, an indication of modality found in metadata associated with the content 212, and/or the like. In some embodiments, the routing component 310 may comprise a classification model such as a machine-learning-based classification model which may, for instance, comprise a trained neural network or other type of machine learning model. Some embodiments provide that the routing component 310 comprises an embedding model that creates embedding representations of content items, and the content items are routed based on the embedding representations (e.g., the content items may be routed based on semantic similarity to other items that are associated with modalities).

The modality transformation machine learning model 300 may comprise multiple encoders 305A-D, and each encoder may be trained to convert content from a given modality to a target modality. The modality transformation machine learning model 300 (and/or a machine learning model used by processing engine 100) may be trained based on supervised, unsupervised or semi-supervised learning techniques.

Supervised learning techniques generally involve providing training inputs to a machine learning model. The machine learning model processes the training inputs and outputs predictions based on the training inputs. The predictions are compared to known labels associated with the training inputs to determine the accuracy of the machine learning model, and parameters of the machine learning model are iteratively adjusted until one or more conditions are met. For instance, the one or more conditions may relate to an objective function (e.g., a cost function or loss function) for optimizing one or more variables (e.g., model accuracy). In some embodiments, the conditions may relate to whether the predictions produced by the machine learning model based on the training inputs match the known labels associated with the training inputs or whether a measure of error between training iterations is not decreasing or not decreasing more than a threshold amount. The conditions may also include whether a training iteration limit has been reached. Model parameters adjusted during training may include, for example, hyperparameters, values related to numbers of iterations, weights, functions used by nodes to calculate scores, level of randomness, and/or the like. In some embodiments, validation and testing are also performed for a machine learning model, such as based on validation data and test data, as is known in the art.

In some embodiments, back-propagation is used to train the modality transformation machine learning model 300. Back-propagation refers to a process of calculating a gradient based on a loss function, comparing recreated input with the actual input. By propagating this gradient "back" through the layers of the modality transformation machine learning model 300, the weights can be modified to produce more accurate outputs on subsequent attempts to recreate the input.

A training process to train the modality transformation machine learning model 300 to transform content from a given modality to the target modality may comprise providing a training input to the modality transformation machine learning model 300. The training input may comprise a content item that corresponds to the given modality. The training input may be provided to a given encoder of the modality transformation machine learning model 300 that is to be used for content items that correspond to the given modality. The training input may be processed through layers of the modality transformation machine learning model 300 such as the given encoder and the decoder 320 in order to generate a transformed version of the content item that corresponds to the target modality. The transformed content item may be compared to a ground truth content item that accurately represents the content item in the particular modality (e.g., the comparison may be performed using embedding representations and semantic similarity algorithms). Based on a variance between the transformed content item and the ground truth transformed content item, parameters of the modality transformation machine learning model 300 may be iteratively adjusted. For example, back-propagation may be used to propagate a gradient determined using a loss function through the layers (which may include decoder 320 and encoder 305) of the modality transformation machine learning model 300. The supervised learning process may be repeated for different input modalities and corresponding encoders.

Certain embodiments provide that one or more machine learning models (e.g., modality transformation machine learning model 300 and/or a machine learning model used by processing engine 100) may be retrained based on user feedback. A user may provide feedback with respect to transformed content and/or an output generated by processing engine 100 based on the transformed content. For example, the feedback may indicate that a new version of content does not accurately represent the content in the target modality. As another example, the feedback may indicate areas of improvement for the output generated by the processing engine 100. Based on this feedback, labeled training data may be generated (e.g., automatically) and used to retrain the modality transformation machine learning model 300 and/or a machine learning model used by processing engine 100. For example, if the feedback indicates that a first content item accurately represents the content in the target modality and a second content item does not accurately represent the content in the target modality, the first content item may be labeled as a ground truth or positive training example, while the second content item may be labeled as a negative training example. Parameters of the modality transformation machine learning model 300 may be iteratively adjusted until an output of the model matches the ground truth (e.g., until the similarity of the output to the ground truth reaches a threshold). Alternatively, if the output of the modality transformation machine learning model 300 matches the negative example, parameters of the model may be adjusted until the output no longer matches the negative example.

By training the modality transformation machine learning model 300 based on historical content items and retraining the model based on user feedback, embodiments of the present disclosure allow for transformations that are accurate to the specific domains on which the model is trained, and adaptive to the needs/feedback of users.

In some embodiments, a machine learning model (e.g., modality transformation machine learning model 300 and/or a machine learning model used by processing engine 100) may be provided with few-shot examples. Few-shot learning involves providing a machine learning model with a sequence of examples related to a task. In few-shot learning, the model may learn from these examples and thus perform the task. For example, each few-shot example provided to the modality transformation machine learning model 300 may comprise a historical input and a historically generated content item that represents the historical input in the target modality. The few-shot examples may be provided as part of an input prompt to the modality transformation machine learning model 300 along with the content 212. The modality transformation machine learning model 300 may learn from the few-shot examples, and thus generate transformed content 222 that is more accurate. Few-shot examples provided to a machine learning model used by processing engine 100 may comprise a historical input content item and an output that was accurately generated based on the input content item.

The content 212 may correspond to a particular modality. Based on this, the routing component 310 may route the content 212 to an encoder that is trained to transform this particular modality into the target modality. As shown in **FIG. 3**, encoder 305B is an encoder that is trained to transform the content 212 from the particular modality to the target modality by generating a transformed version of the content 212 that corresponds to the target modality. Encoder 305A may be trained to transform content from a second modality to the target modality, encoder 305C may be trained to transform content from a third modality to the target modality, and encoder 305D may be trained to transform content from a fourth modality to the target modality. Although four encoders 305 are shown in **FIG. 3**, more or fewer encoders may be used, and each respective encoder may be trained to transform content from a respective modality to the target modality.

The content 212 may be provided as an input to encoder 305B. The encoder 305B may generate an intermediate representation (e.g., an embedding representation) of the content 212 that can be processed by the decoder 320. Based on the intermediate representation, the decoder may generate transformed content 222, a version of the content 212 that corresponds to the target modality.

In certain embodiments, the target modality may be an embedding representation of the content items. In such embodiments, the decoder 320 may be omitted, and the transformed content 222 may comprise an embedding representation generated by an encoder 305.

Some embodiments provide that the modality transformation machine learning model 300 is trained to convert content that corresponds to multiple modalities (e.g., multi-modal content) into the target modality. As a result, a content item comprising both image and text (e.g., a poster or graphic) may be converted into a target modality (e.g., an audio file or a different type of image/text file). According to certain embodiments, the target modality may be multi-modal. In other words, the modality transformation machine learning model 300 may be trained to convert content into multi-modal content. For example, content that corresponds to a first modality (e.g., text) may be converted into content that corresponds to multiple modalities (e.g., a video with sound).

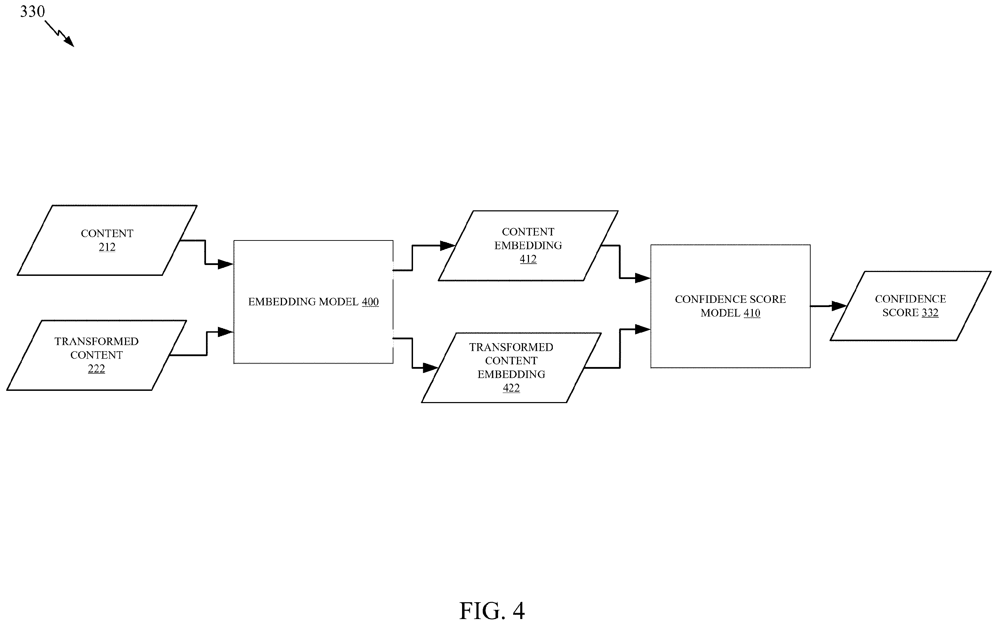

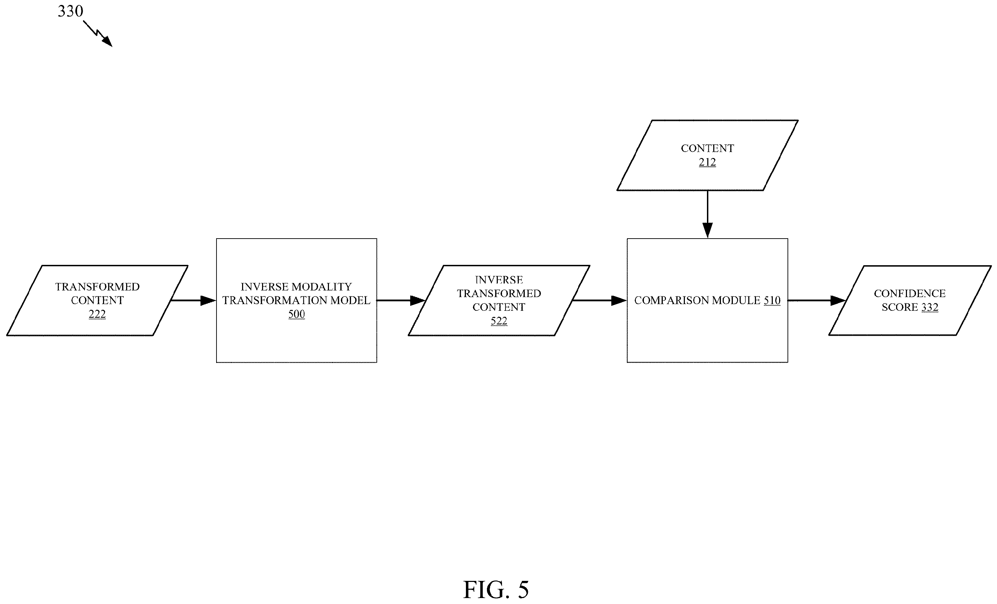

Modality transformation model 110 may comprise a confidence score component 330, as described in further detail below with respect to **FIG. 4** and **FIG. 5****.** The confidence score component 330 may generate a confidence score that indicates the likelihood that the transformed content 222 is an accurate representation of the original content 212 in the target modality.

In some embodiments, the output of the modality transformation model 110 comprises an explanation structure. The explanation structure may be, for example, a plain text description of the transformed content 222 that helps the user understand the transformed content 222. The explanation structure may be generated by the modality transformation machine learning model 300, or the explanation structure may be generated separately by a generative machine learning model (e.g., an LLM) that receives the transformed content 222 as input and generates the explanation structure as output.

According to certain embodiments, the output of the modality transformation model 110 may be fine-tuned to the goals/specifications of the user. For example, the modality transformation machine learning model 300 may be configured to accept a prompt that specifies details for transformed content as input. The prompt may, for example, specific stylistic choices (e.g., choices regarding art style, theme, tone, and/or the like) for newly-generated content items. As a result, the modality transformation machine learning model 300 may generate content that corresponds to the target modality and the target style specified by the user. The prompt may be provided by the user, or generated automatically based on input provided by the user (e.g., selection of one or more options).

**FIG. 4** depicts an additional example of computing components related to automated content modality transformation. In particular, **FIG. 4** depicts an example of a confidence score component 330 as shown in **FIG. 3****.**

As shown in **FIG. 4****,** the confidence score component 330 may comprise an embedding model 400 that is configured to generate embedding representations of content items. The content 212 and the transformed content 222 may be provided as input to the embedding model 400, which may generate an embedding representation of the content 212 (content embedding 412) and an embedding representation of the transformed content 222 (transformed content embedding 422). The content embedding 412 and the transformed content embedding 422 may then be provided as part of an input to confidence score model 410. If a content item is already an embedding, the content item may not be provided to the embedding model 400.

The confidence score model 410 may comprise a machine learning model (e.g., a neural network) that has been trained to generate a confidence score 332 that indicates the likelihood that a transformed content item accurately represents the original content item in the target modality. The confidence score model 410 may be trained based on supervised, unsupervised or semi-supervised learning techniques.

For example, the confidence score model 410 may be trained through a supervised learning process involving a training data set that comprises a content item, a transformed version of the content item that corresponds to the target modality, and a label that indicates whether the transformed version is an accurate representation of the content item. The content item and the transformed version (or embedding representations thereof) may be provided as input to the confidence score model 410, and the confidence score model 410 may generate a confidence score in response to the input. Then, parameters of the confidence score model 410 may be iteratively adjusted based on a variance between the confidence score and the label.

Certain embodiments provide that the training data is labeled manually. In alternate embodiments, the labels are generated by a machine learning model. For example, the content and the transformed version of the content may be provided to a highly-specialized model such as an LLM-as-judge model that is configured to determine whether transformed content accurately represents the original version of the content.

The trained confidence score model 410 may be provided with an input comprising the content embedding 412 and the transformed content embedding 422. Based on the input, the confidence score model 410 may generate a confidence score 332 that indicates the likelihood that the transformed content 222 accurately represents the content 212 in the target modality.

**FIG. 5** depicts an additional example of computing components related to automated content modality transformation. In particular, **FIG. 5** depicts an alternate example of a confidence score component 330 as shown in **FIG. 3**.

Transformed content 222 may be provided to an inverse modality transformation model 500. The inverse modality transformation model 500 may be a model similar to modality transformation machine learning model 300. However, in contrast to modality transformation machine learning model 300, inverse modality transformation model 500 may be trained to convert a transformed content item from the target modality to the original modality of the transformed content item. In other words, while modality transformation machine learning model 300 may be trained to convert content items from Modality A to Modality B, inverse modality transformation model 500 may be trained to convert content items from Modality B to Modality A.

Thus, when transformed content 222 is provided as input to inverse modality transformation model 500, inverse transformed content 522 may be generated. Inverse transformed content 522 may be a version of the content 212 that corresponds to the same modality as the content 212.

The inverse transformed content 522 and the content 212 may be provided to comparison module 510. Comparison module 510 may comprise a computing component configured to compare content items. For example, comparison module 510 may comprise an embedding model that is configured to generate embedding representations of the content items. Comparison module 510 may then compare the content items by calculating the dot product between the two embedding vectors, determining the cosine similarity, Jaccard similarity, Euclidean distance, or Levenshtein distance between the two embedding vectors, using other types of semantic similarity algorithms, or using other techniques for comparing two vectors as known in the art.

The calculated measure of similarity between the two embedding vectors may then be used as the confidence score 332. For example, if the content 212 and the inverse transformed version of the content are not similar, this may indicate that the content 212 has not been accurately transformed to the target modality.

### Example Operations Related to Automated Content Modality Transformation

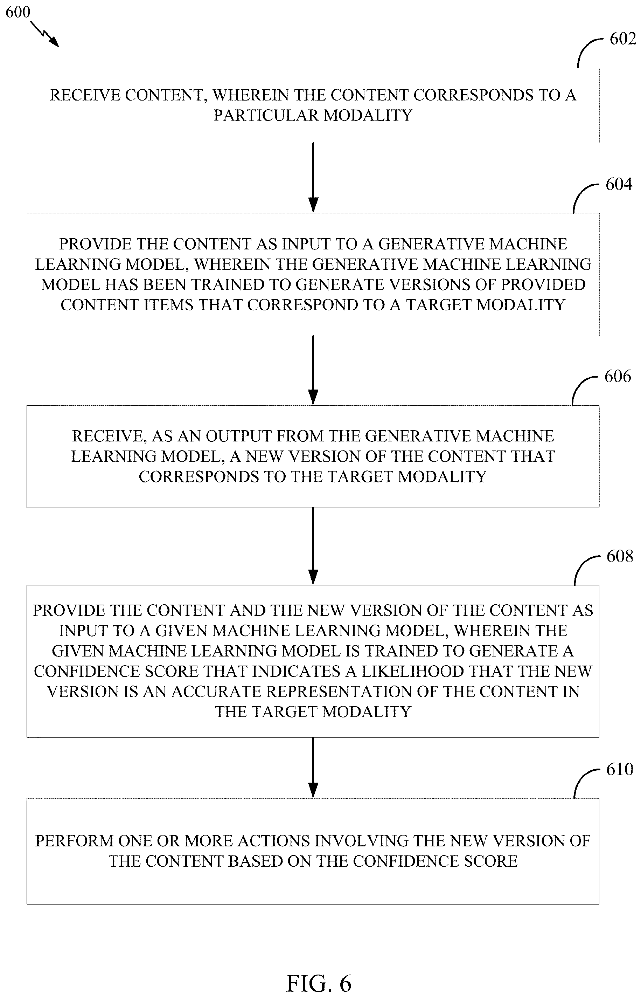

**FIG. 6** depicts example operations 600 related to automated content modality transformation. For example, operations 600 may be performed by one or more of the components described with respect to **FIG. 1**, **FIG. 2**, **FIG. 3**, **FIG. 4**, and **FIG. 5****.**

Operations 600 begin at step 602 with receiving content, wherein the content corresponds to a particular modality.

Operations 600 continue at step 604 with providing the content as input to a generative machine learning model, wherein the generative machine learning model has been trained to generate versions of provided content items that correspond to a target modality. In certain embodiments, the generative machine learning model comprises multiple encoders, wherein each encoder of the multiple encoders is trained to convert content items from a respective modality to the target modality. Some embodiments provide that the content is routed to a particular encoder of the multiple encoders based on the content corresponding to the particular modality, wherein the particular encoder is trained to convert content items from the particular modality to the target modality. According to certain embodiments, the generative machine learning model is trained through a supervised learning process comprising: providing training content that corresponds to a given modality as input to a given encoder of the multiple encoders; receiving an output based on the input; and iteratively adjusting parameters of the generative machine learning model based on a variance between the output and a ground truth version of the training content that corresponds to the target modality. Some embodiments provide that the iteratively adjusting comprises using back-propagation to adjust weights of the given encoder and a decoder of the generative machine learning model.

Operations 600 continue at step 606 with receiving, as an output from the generative machine learning model, a new version of the content that corresponds to the target modality.

Operations 600 continue at step 608 with providing the content and the new version of the content as input to a given machine learning model, wherein the given machine learning model is trained to generate a confidence score that indicates a likelihood that the new version is an accurate representation of the content in the target modality. In certain embodiments, the given machine learning model is trained through a supervised learning process comprising: providing a training input to the given machine learning model, wherein the training input comprises training content that corresponds to a modality other than the target modality, a given version of the training content that corresponds to the target modality, and a label that indicates whether the given version is an accurate representation of the training content in the target modality; receiving, in response to the training input, a given output indicating a likelihood that the given version is an accurate representation of the training content in the target modality; and iteratively adjusting parameters of the given machine learning model based on a variance between the given output and the label. According to some embodiments, the label is generated by a particular machine learning model that is trained to determine whether versions of particular content items in different modalities accurately represent the particular content items. In certain embodiments, the given machine learning model comprises a transformation reversal model that is configured to convert the new version from the target modality to the particular modality, wherein the confidence score is generated based on comparing an output of the transformation reversal model to the content using a semantic similarity algorithm.

Operations 600 continue at step 610 with performing one or more actions involving the new version of the content based on the confidence score.

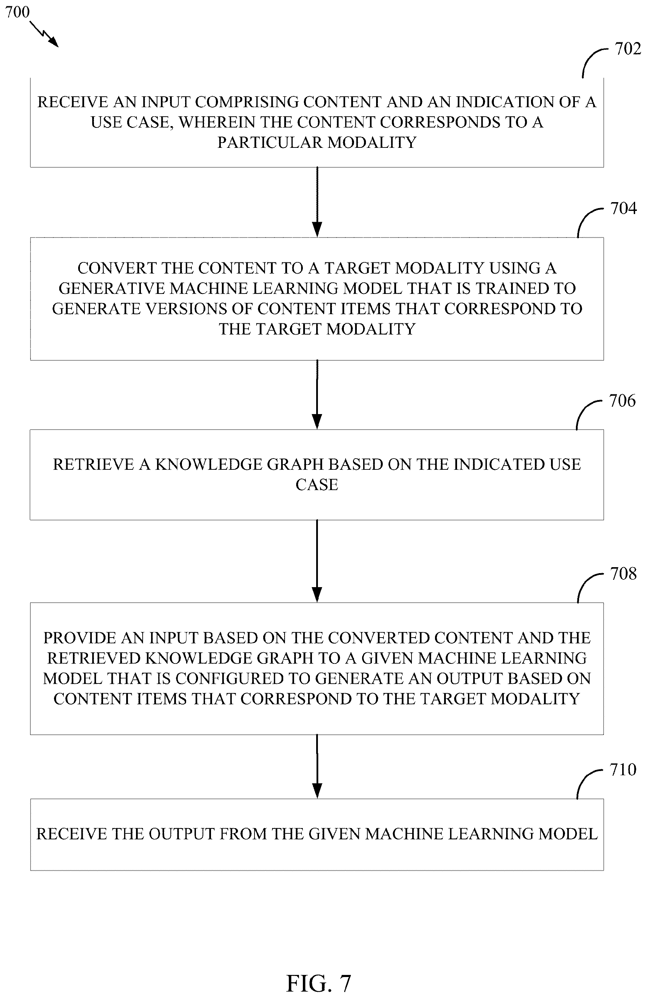

**FIG. 7** depicts additional example operations 700 related to automated content modality transformation. For example, operations 700 may be performed by one or more of the components described with respect to **FIG. 1**, **FIG. 2**, **FIG. 3**, **FIG. 4**, and **FIG. 5****.**

Operations 700 begin at step 702 with receiving an input comprising content and an indication of a use case, wherein the content corresponds to a particular modality.

Operations 700 continue at step 704 with converting the content to a target modality using a generative machine learning model that is trained to generate versions of content items that correspond to the target modality. In certain embodiments, the generative machine learning model comprises multiple encoders, wherein each encoder of the multiple encoders is trained to convert content items from a respective modality to the target modality.

Operations 700 continue at step 706 with retrieving a knowledge graph based on the indicated use case.

Operations 700 continue at step 708 with providing an input based on the converted content and the retrieved knowledge graph to a given machine learning model that is configured to generate an output based on content items that correspond to the target modality. In some embodiments, providing the input based on the converted content and the retrieved knowledge graph comprises: using the knowledge graph to determine that a particular data item related to the use case is not present within the converted content; generating a prompt instructing a user to provide the particular data item; receiving additional content based on the prompt, wherein the additional content includes the particular data item; converting the additional content to the target modality using the generative machine learning model; and including the particular data item as part of the input.

Operations 700 continue at step 710 with receiving the output from the given machine learning model.

In certain embodiments, the converted content and the content are provided as input to a particular machine learning model, wherein the particular machine learning model is trained to generate a confidence score that indicates a likelihood that the converted content is an accurate representation of the content in the target modality, wherein the converted content is provided to the given machine learning model based on the confidence score exceeding a threshold.

According to some embodiments, a transformation reversal model is used to convert the converted content into a new version that corresponds to the particular modality, wherein a confidence score is generated based on comparing the new version to the content using a semantic similarity algorithm, wherein the converted content is provided to the given machine learning model based on the confidence score exceeding a threshold.

### Example of a Processing System for Automated Content Modality Transformation

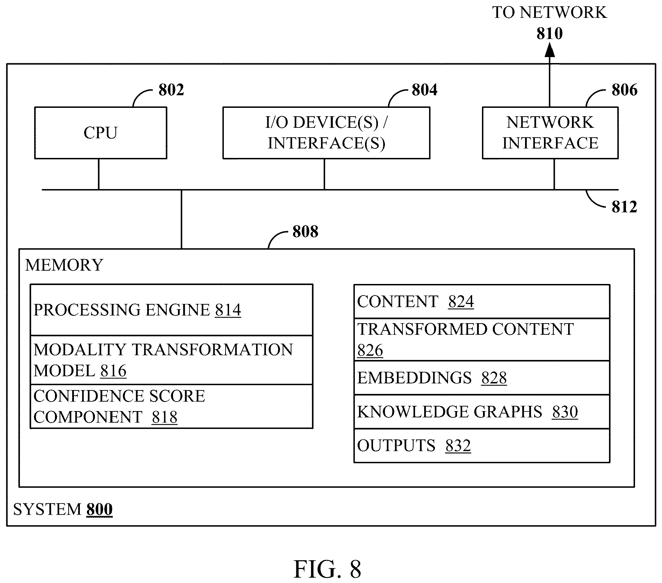

**FIG. 8** illustrates an example system 800 with which embodiments of the present disclosure may be implemented. For example, system 800 may be configured to perform operations 600 of **FIG. 6**, operations 700 of **FIG. 7**, and/or to implement one or more components as in **FIG. 1**, **FIG. 2**, **FIG. 3**, **FIG. 4**, and **FIG. 5****.**

System 800 includes a central processing unit (CPU) 802, one or more I/O device interfaces that may allow for the connection of various I/O devices 804 (e.g., keyboards, displays, mouse devices, pen input, etc.) to the system 800, network interface 806, a memory 808, and an interconnect 812. It is contemplated that one or more components of system 800 may be located remotely and accessed via a network 810. It is further contemplated that one or more components of system 800 may comprise physical components or virtualized components.

CPU 802 may retrieve and execute programming instructions stored in the memory 808. Similarly, the CPU 802 may retrieve and store application data residing in the memory 808. The interconnect 812 transmits programming instructions and application data, among the CPU 802, I/O device interface 804, network interface 806, and memory 808. CPU 802 is included to be representative of a single CPU, multiple CPUs, a single CPU having multiple processing cores, and other arrangements.

Additionally, the memory 808 is included to be representative of a random access memory or the like. In some embodiments, memory 808 may comprise a disk drive, solid state drive, or a collection of storage devices distributed across multiple storage systems. Although shown as a single unit, the memory 808 may be a combination of fixed and/or removable storage devices, such as fixed disc drives, removable memory cards or optical storage, network attached storage (NAS), or a storage area-network (SAN).

As shown, memory 808 includes processing engine 814, modality transformation model 816, and confidence score component 818. In some embodiments, processing engine 814 may be representative of processing engine 100 of **FIG. 1** or **FIG. 2****.** Modality transformation model 816 may be representative of modality transformation model 110 of **FIG. 1** or **FIG. 2**. Confidence score component 818 may be Confidence score component 330 of **FIG. 3****,** **FIG. 4****, or** **FIG. 5****.**

Memory 808 further comprises content 824, which may correspond to content 212 of **FIG. 2****,** **FIG. 3****, or** **FIG. 4****.** Memory 808 further comprises transformed content 826, which may correspond to transformed content 222 of **FIG. 2****,** **FIG. 3****,** or **FIG. 4****.** Memory 808 further comprises embeddings 828, which may correspond to embedding representations of content intems. Memory 808 further comprises knowledge graphs 830, which may correspond to knowledge graphs contained within knowledge graph database 215 of **FIG. 2**. Memory 808 further comprises outputs 832, which may correspond to output 232 of **FIG. 2****.**

It is noted that in some embodiments, system 800 may interact with one or more external components, such as via network 810, in order to retrieve data and/or perform operations.

### Additional Considerations

The preceding description provides examples, and is not limiting of the scope, applicability, or embodiments set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

The preceding description is provided to enable any person skilled in the art to practice the various embodiments described herein. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and other operations. Also, "determining" may include receiving (e.g., receiving information), accessing (e.g., accessing data in a memory) and other operations. Also, "determining" may include resolving, selecting, choosing, establishing and other operations.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

A processing system may be implemented with a bus architecture. The bus may include any number of interconnecting buses and bridges depending on the specific application of the processing system and the overall design constraints. The bus may link together various circuits including a processor, machine-readable media, and input/output devices, among others. A user interface (e.g., keypad, display, mouse, joystick, etc.) may also be connected to the bus. The bus may also link various other circuits such as timing sources, peripherals, voltage regulators, power management circuits, and other types of circuits, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer-readable medium. Software shall be construed broadly to mean instructions, data, or any combination thereof, whether referred to as software, firmware, middleware, microcode, hardware description language, or otherwise. Computer-readable media include both computer storage media and communication media, such as any medium that facilitates transfer of a computer program from one place to another. The processor may be responsible for managing the bus and general processing, including the execution of software modules stored on the computer-readable storage media. A computer-readable storage medium may be coupled to a processor such that the processor can read information from, and write information to, the storage medium. In the alternative, the storage medium may be integral to the processor. By way of example, the computer-readable media may include a transmission line, a carrier wave modulated by data, and/or a computer readable storage medium with instructions stored thereon separate from the wireless node, all of which may be accessed by the processor through the bus interface. Alternatively, or in addition, the computer-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module, it will be understood that such functionality is implemented by the processor when executing instructions from that software module.

A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

Thus, from one perspective, there has now been described automated content modality transformation. Embodiments include receiving content that corresponds to a particular modality. Embodiments further include providing the content as input to a generative machine learning model that has been trained to generate versions of provided content items that correspond to a target modality. Embodiments further include receiving, as an output from the generative machine learning model, a new version of the content that corresponds to the target modality. Embodiments further include providing the content and the new version of the content as input to a given machine learning model that is trained to generate a confidence score that indicates a likelihood that the new version is an accurate representation of the content in the target modality. Embodiments further include performing one or more actions involving the new version of the content based on the confidence score.

Further examples of feature combinations taught by the present disclosure are set out in the following numbered clauses:
1. A method of content modality transformation, comprising:
   receiving content, wherein the content corresponds to a particular modality;
   providing the content as input to a generative machine learning model, wherein the generative machine learning model has been trained to generate versions of provided content items that correspond to a target modality;
   receiving, as an output from the generative machine learning model, a new version of the content that corresponds to the target modality;
   providing the content and the new version of the content as input to a given machine learning model, wherein the given machine learning model is trained to generate a confidence score that indicates a likelihood that the new version is an accurate representation of the content in the target modality; and
   performing one or more actions involving the new version of the content based on the confidence score.
2. The method of clause 1, wherein the generative machine learning model comprises multiple encoders, wherein each encoder of the multiple encoders is trained to convert content items from a respective modality to the target modality.
3. The method of clause 2, wherein the content is routed to a particular encoder of the multiple encoders based on the content corresponding to the particular modality, wherein the particular encoder is trained to convert content items from the particular modality to the target modality.
4. The method of clause 2, wherein the generative machine learning model is trained through a supervised learning process comprising:
   providing training content that corresponds to a given modality as input to a given encoder of the multiple encoders;
   receiving an output based on the input; and
   iteratively adjusting parameters of the generative machine learning model based on a variance between the output and a ground truth version of the training content that corresponds to the target modality.
5. The method of clause 4, wherein the iteratively adjusting comprises using back-propagation to adjust weights of the given encoder and a decoder of the generative machine learning model.
6. The method of any preceding clause, wherein the given machine learning model is trained through a supervised learning process comprising:
   providing a training input to the given machine learning model, wherein the training input comprises training content that corresponds to a modality other than the target modality, a given version of the training content that corresponds to the target modality, and a label that indicates whether the given version is an accurate representation of the training content in the target modality;
   receiving, in response to the training input, a given output indicating a likelihood that the given version is an accurate representation of the training content in the target modality; and
   iteratively adjusting parameters of the given machine learning model based on a variance between the given output and the label.
7. The method of clause 6, wherein the label is generated by a particular machine learning model that is trained to determine whether versions of particular content items in different modalities accurately represent the particular content items.
8. The method of any preceding clause, wherein the given machine learning model comprises a transformation reversal model that is configured to convert the new version from the target modality to the particular modality, wherein the confidence score is generated based on comparing an output of the transformation reversal model to the content using a semantic similarity algorithm.
9. A method of modality-shifting content processing, comprising:
   receiving an input comprising content and an indication of a use case, wherein the content corresponds to a particular modality;
   converting the content to a target modality using a generative machine learning model that is trained to generate versions of content items that correspond to the target modality;
   retrieving a knowledge graph based on the indicated use case;
   providing an input based on the converted content and the retrieved knowledge graph to a given machine learning model that is configured to generate an output based on content items that correspond to the target modality; and
   receiving the output from the given machine learning model.
10. The method of clause 9, further comprising providing the converted content and the content as input to a particular machine learning model, wherein the particular machine learning model is trained to generate a confidence score that indicates a likelihood that the converted content is an accurate representation of the content in the target modality, wherein the converted content is provided to the given machine learning model based on the confidence score exceeding a threshold.
11. The method of clause 9 or 10, further comprising using a transformation reversal model to convert the converted content into a new version that corresponds to the particular modality, wherein a confidence score is generated based on comparing the new version to the content using a semantic similarity algorithm, wherein the converted content is provided to the given machine learning model based on the confidence score exceeding a threshold.
12. The method of clause 9, 10 or 11, wherein providing the input based on the converted content and the retrieved knowledge graph comprises:
   using the knowledge graph to determine that a particular data item related to the use case is not present within the converted content;
   generating a prompt instructing a user to provide the particular data item;
   receiving additional content based on the prompt, wherein the additional content includes the particular data item;
   converting the additional content to the target modality using the generative machine learning model; and
   including the particular data item as part of the input.
13. A system for content modality transformation, comprising:
   one or more processors; and
   a memory comprising instructions that, when executed by the one or more processors, cause the system to:
      receive content, wherein the content corresponds to a particular modality;
      provide the content as input to a generative machine learning model, wherein the generative machine learning model has been trained to generate versions of provided content items that correspond to a target modality;
      receive, as an output from the generative machine learning model, a new version of the content that corresponds to the target modality;
      provide the content and the new version of the content as input to a given machine learning model, wherein the given machine learning model is trained to generate a confidence score that indicates a likelihood that the new version is an accurate representation of the content in the target modality; and
      perform one or more actions involving the new version of the content based on the confidence score.
14. The system of clause 13, wherein the generative machine learning model comprises multiple encoders, wherein each encoder of the multiple encoders is trained to convert content items from a respective modality to the target modality.
15. The system of clause 14, wherein the content is routed to a particular encoder of the multiple encoders based on the content corresponding to the particular modality, wherein the particular encoder is trained to convert content items from the particular modality to the target modality.
16. The system of clause 14 or 15, wherein the generative machine learning model is trained through a supervised learning process comprising:
   providing training content that corresponds to a given modality as input to a given encoder of the multiple encoders;
   receiving an output based on the input; and
   iteratively adjusting parameters of the generative machine learning model based on a variance between the output and a ground truth version of the training content that corresponds to the target modality.
17. The system of clause 16, wherein the iteratively adjusting comprises using back-propagation to adjust weights of the given encoder and a decoder of the generative machine learning model.
18. The system of any of clauses 13 to 17, wherein the given machine learning model is trained through a supervised learning process comprising:
   providing a training input to the given machine learning model, wherein the training input comprises training content that corresponds to a modality other than the target modality, a given version of the training content that corresponds to the target modality, and a label that indicates whether the given version is an accurate representation of the training content in the target modality;
   receiving, in response to the training input, a given output indicating a likelihood that the given version is an accurate representation of the training content in the target modality; and
   iteratively adjusting parameters of the given machine learning model based on a variance between the given output and the label.
19. The system of clause 18, wherein the label is generated by a particular machine learning model that is trained to determine whether versions of particular content items in different modalities accurately represent the particular content items.
20. The system of any of clauses 13 to 19, wherein the given machine learning model comprises a transformation reversal model that is configured to convert the new version from the target modality to the particular modality, wherein the confidence score is generated based on comparing an output of the transformation reversal model to the content using a semantic similarity algorithm.

## Claims

1. A method of content modality transformation, comprising:
receiving content, wherein the content corresponds to a particular modality;
providing the content as input to a generative machine learning model, wherein the generative machine learning model has been trained to generate versions of provided content items that correspond to a target modality;
receiving, as an output from the generative machine learning model, a new version of the content that corresponds to the target modality;
providing the content and the new version of the content as input to a given machine learning model, wherein the given machine learning model is trained to generate a confidence score that indicates a likelihood that the new version is an accurate representation of the content in the target modality; and
performing one or more actions involving the new version of the content based on the confidence score.

2. The method of Claim 1, wherein the generative machine learning model comprises multiple encoders, wherein each encoder of the multiple encoders is trained to convert content items from a respective modality to the target modality.

3. The method of Claim 2, wherein the content is routed to a particular encoder of the multiple encoders based on the content corresponding to the particular modality, wherein the particular encoder is trained to convert content items from the particular modality to the target modality.

4. The method of Claim 2, wherein the generative machine learning model is trained through a supervised learning process comprising:
providing training content that corresponds to a given modality as input to a given encoder of the multiple encoders;
receiving an output based on the input; and
iteratively adjusting parameters of the generative machine learning model based on a variance between the output and a ground truth version of the training content that corresponds to the target modality.

5. The method of Claim 4, wherein the iteratively adjusting comprises using back-propagation to adjust weights of the given encoder and a decoder of the generative machine learning model.

6. The method of any preceding claim, wherein the given machine learning model is trained through a supervised learning process comprising:
providing a training input to the given machine learning model, wherein the training input comprises training content that corresponds to a modality other than the target modality, a given version of the training content that corresponds to the target modality, and a label that indicates whether the given version is an accurate representation of the training content in the target modality;
receiving, in response to the training input, a given output indicating a likelihood that the given version is an accurate representation of the training content in the target modality; and
iteratively adjusting parameters of the given machine learning model based on a variance between the given output and the label.

7. The method of Claim 6, wherein the label is generated by a particular machine learning model that is trained to determine whether versions of particular content items in different modalities accurately represent the particular content items.

8. The method of any preceding claim, wherein the given machine learning model comprises a transformation reversal model that is configured to convert the new version from the target modality to the particular modality, wherein the confidence score is generated based on comparing an output of the transformation reversal model to the content using a semantic similarity algorithm.

9. A method of modality-shifting content processing, comprising:
receiving an input comprising content and an indication of a use case, wherein the content corresponds to a particular modality;
converting the content to a target modality using a generative machine learning model that is trained to generate versions of content items that correspond to the target modality;
retrieving a knowledge graph based on the indicated use case;
providing an input based on the converted content and the retrieved knowledge graph to a given machine learning model that is configured to generate an output based on content items that correspond to the target modality; and
receiving the output from the given machine learning model.

10. The method of Claim 9, further comprising providing the converted content and the content as input to a particular machine learning model, wherein the particular machine learning model is trained to generate a confidence score that indicates a likelihood that the converted content is an accurate representation of the content in the target modality, wherein the converted content is provided to the given machine learning model based on the confidence score exceeding a threshold.

11. The method of Claim 9 or 10, further comprising using a transformation reversal model to convert the converted content into a new version that corresponds to the particular modality, wherein a confidence score is generated based on comparing the new version to the content using a semantic similarity algorithm, wherein the converted content is provided to the given machine learning model based on the confidence score exceeding a threshold.

12. The method of Claim 9, 10 or 11, wherein providing the input based on the converted content and the retrieved knowledge graph comprises:
using the knowledge graph to determine that a particular data item related to the use case is not present within the converted content;
generating a prompt instructing a user to provide the particular data item;
receiving additional content based on the prompt, wherein the additional content includes the particular data item;
converting the additional content to the target modality using the generative machine learning model; and
including the particular data item as part of the input.

13. A system for content modality transformation, comprising:
one or more processors; and
a memory comprising instructions that, when executed by the one or more processors, cause the system to:
receive content, wherein the content corresponds to a particular modality;
provide the content as input to a generative machine learning model, wherein the generative machine learning model has been trained to generate versions of provided content items that correspond to a target modality;
receive, as an output from the generative machine learning model, a new version of the content that corresponds to the target modality;
provide the content and the new version of the content as input to a given machine learning model, wherein the given machine learning model is trained to generate a confidence score that indicates a likelihood that the new version is an accurate representation of the content in the target modality; and
perform one or more actions involving the new version of the content based on the confidence score.

14. The system of Claim 13, wherein the generative machine learning model comprises multiple encoders, wherein each encoder of the multiple encoders is trained to convert content items from a respective modality to the target modality.

15. The system of Claim 14, wherein the content is routed to a particular encoder of the multiple encoders based on the content corresponding to the particular modality, wherein the particular encoder is trained to convert content items from the particular modality to the target modality.
